# EUROPÄISCHE PATENTSCHRIFT

(11) **EP 2 045 206 B1**
(45) Veröffentlichungstag und Bekanntmachung des Hinweises auf die Patenterteilung: **01.04.2015**
(21) Anmeldenummer: 08015885.0
(22) Anmeldetag: 09.09.2008
(51) Int. Cl.: B60L 11/18, B60K 1/04, B66F 9/075

(54) **Flurförderzeug**
Industrial truck
Chariot de manutention

(30) Priorität: 04.10.2007 DE 102007047503
(43) Veröffentlichungstag der Anmeldung: 08.04.2009
(73) Patentinhaber: STILL GmbH, 22113 Hamburg (DE)
(72) Erfinder: Rattke, Heiko, 21435 Stelle (DE); Buchmann, Michael, 22393 Hamburg (DE)
(74) Vertreter: Geirhos, Johann

(56) Entgegenhaltungen:
- EP-A- 1 411 020
- JP-A- 2003 118 989
- US-A1- 2005 093 335
- US-B1- 6 474 429

## Beschreibung

Die Erfindung betrifft ein Flurförderzeug, insbesondere Gegengewichts-Gabelstapler, mit einem Rahmen und einer innerhalb des Rahmens in einem Batteriefach angeordneten Energleversorgungseinheit, wobei der Rahmen mit einer Öffnung für einen Wechsel der Energieversorgungseinheit in horizontaler Richtung versehen ist und die Öffnung von einer seitlichen Rahmenöffnung und einer nach unten an die seitliche Rahmenöffnung anschließenden und übergehenden unteren Rahmenöffnung gebildet ist, wobei die Rahmenöffnung von einer Aussparung in einer Bodenplatte des Rahmens gebildet ist, wobei am oberen Bereich der seitlichen Rahmenöffnung ein Träger angeordnet ist, der ein das Batteriefach nach vorne begrenzendes vorderes Rahmenblech mit einem das Batteriefach nach hinten abschließenden hinteren Rahmenblech verbindet und die seitliche Rahmenöffnung mittels einer Batteriefachklappe verschließbar ist.

Die US 2005/0093335 A1 offenbart einen Gegengewichts-Gabelstapler mit einem Rahmen und einem Batteriefach, das zur Aufnahme einer als Batterieblock ausgebildeten Energieversorgungseinheit dient. Der Rahmen ist für den horizontalen und seitlichen Wechsel der Energieversorgungseinheit mit einer Öffnung versehen, die von einer seitlichen Öffnung und einer angrenzenden unteren Öffnung gebildet ist. Um den durch diese Öffnung geschwächten Fahrzeugrahmen zu versteifen, ist bei der US 2005/0093335 A1 die die seitliche Öffnung verschließenden Tür rahmenversteifend ausgebildet. Hierzu ist an der Tür ein in der geschlossenen Stellung kraftübertragende Verriegelungseinheit vorgesehen. Die Verriegelungseinheit besteht aus einem an der Tür befestigten Bolzen, der an seinem Ende mit einem Arretierbolzen versehen ist, der in einem entsprechenden Aufnahmetopf am Fahrzeugsrahmen zusammenwirkt, um in der geschlossenen Stellung der Tür Zug- und Druckkräfte zu übertragen. Da die Tür an der Kraftübertragung im Fahrzeugrahmen teilnimmt, um Verformungen des Rahmens zu minimieren, sind die Tür, die Türscharniere und die Verriegelungseinheit entsprechend stabil auszuführen.

Ein gattungsähnliches Flurförderzeug ist aus der EP 1 411 020 B1 bekannt.

Für den seitlichen Wechsel der Energieversorgungseinheit ist der Rahmen mit einer Öffnung versehen, die von einer seitlichen Rahmenöffnung und einer anschließenden unteren Rahmenöffnung gebildet ist. Um die aus dieser Öffnung des Rahmens resultierende Schwächung des Rahmens hinsichtlich der Festigkeit und Steifigkeit auszugleichen, ist an der Oberseite der Öffnung ein Träger angeordnet. Ein derartiger Träger verursacht jedoch einen hohen Fertigungsaufwand des Rahmens.

Der vorliegenden Erfindung liegt die Aufgabe zugrunde, ein Flurförderzeug der eingangs genannten Gattung zur Verfügung zu stellen, dessen Rahmen einen einfachen Aufbau aufweist.

Diese Aufgabe wird erfindungsgemäß dadurch gelöst, dass mindestens ein Versteifungselement vorgesehen ist, das am Übergangsbereich von der seitlichen Rahmenöffnung zur unteren Rahmenöffnung in der Aussparung der Bodenplatte des Rahmens formschlüssig befestigbar ist.

Die Aufgabe wird erfindungsgemäß ebenfalls dadurch gelöst, dass mehrere Versteifungselemente fachwerkartig angeordnet sind und zur formschlüssigen Verbindung des Versteifungselements mit dem Rahmen eine Zapfenverbindung vorgesehen ist.

Erfindungsgemäß ist somit an der Öffnung des Rahmens mindestens ein Versteifungselement angeordnet, das am Rahmen formschlüssig befestigbar ist. Mit einem derartigen formschlüssigen Versteifungselement kann der Rahmen auf einfache Weise im Bereich der Öffnung verstärkt werden und im Bereich der Öffnung Zug- und/oder Druckkräfte übertragen werden, wodurch der versteifende Träger kleiner dimensioniert werden oder ganz entfallen kann. Zudem ergibt sich durch das formschlüssige Versteifungselement ein verbesserter Kraftfluss, wodurch ebenfalls der Rahmen kleiner dimensioniert werden kann. Sofern das Versteifungselement vom Rahmen entfernt ist, ist der Energieversorgungseinheit leicht zugänglich und kann aus dem Batteriefach entnommen bzw. in das Batteriefach eingesetzt werden. Mit dem erfindungsgemäßen formschlüssigen Versteifungselement kann somit der Rahmen einfacher und kostengünstiger aufgebaut werden.

Das Versteifungselement kann hierbei in die seitliche Rahmenöffnung bzw. den Übergangsbereich von der seitlichen Rahmenöffnung zur unteren Rahmenöffnung eingelegt und formschlüssig verbunden werden.

Es können mehrere Versteifungselemente vorgesehen sein, die fachwerkartig angeordnet sind. Mit mehreren Versteifungselementen, die ein Fachwerk oder einen flächigen Verbund bilden können, ist es möglich, neben Zug- und Druckkräften ebenfalls Biege- und Torsionsmomente mittels der Versteifungselemente an der Öffnung zu übertragen, wodurch der Rahmen auf einfache Weise mit einer hohen Steifigkeit und Festigkeit versehen werden kann. Zur formschlüssigen Verbindung des Versteifungselements mit dem Rahmen ist eine Zapfenverbindung vorgesehen. Eine Zapfenverbindung ist auf einfache Weise herstellbar und ermöglicht, dass mehrere Versteifungselemente an einer Zapfenverbindung formschlüssig befestigbar sind.

Besondere Vorteile ergeben sich, wenn das Versteifungselement gemäß einer bevorzugten Ausgestaltungsform der Erfindung an einem Ende um eine vertikale Achse schwenkbar am Rahmen gelagert ist und in einer geschlossenen Position an dem anderen Ende am Rahmen formschlüssig befestigbar ist. Ein derartiges schwenkbares Versteifungselement kann zum Batteriewechsel auf einfache Weise verschwenkt werden, wodurch sich eine gute Zugänglichkeit der Energieversorgungseinheit ergibt, und im Betrieb des Flurförderzeugs bei in dem Batteriefach angeordneter Energieversorgungseinheit mit dem Rahmen formschlüssig verbunden werden, wodurch das Versteifungselement die Stabilität des Rahmens erhöht.

Gemäß einer weiteren bevorzugten Ausführungsform der Erfindung ist das Versteifungselement an der die seitliche Rahmenöffnung verschließenden Batteriefachklappe angeordnet, wobei das Versteifungselement bei geschlossener Batteriefachklappe am Rahmen formschlüssig befestigbar ist. Das Versteifungselement kann hierbei an der Batteriefachklappe starr, verschiebbar oder elastisch befestigt sein. Hierdurch ergibt sich ein einfacher Bauaufwand, da beim Öffnen der Batteriefachklappe gleichzeitig das Versteifungselement von dem Rahmen gelöst wird und beim Schließen der Batteriefachklappe das Versteifungselement am Rahmen formschlüssig befestigt wird.

Das Versteifungselement kann gemäß einer Weiterbildung der Erfindung als Druck- und/oder Zugträger ausgebildet sein. Der Träger kann hierbei mit einem stabförmigen oder balkenförmigen Querschnitt versehen sein.

Besondere Vorteile ergeben sich, wenn zur formschlüssigen Verbindung des Versteifungselements mit dem Rahmen das Versteifungselement vorspannbar ist, insbesondere mittels eines Hydraulikzylinders. Nach der Positionierung des Versteifungselements im Rahmen kann mittels eines Hydraulikzylinders das Versteifungselement mit dem Rahmen verspannt werden. Durch die Vorspannung des Versteifungselements wird hierbei eine spielfreie Kraftübertragung erzielt.

Zur formschlüssigen Verbindung des Versteifungselements mit dem Rahmen kann gemäß einer bevorzugten Weiterbildung der Erfindung eine Hakenverbindung vorgesehen sein. Eine derartige Hakenverbindung ist auf einfache Weise herstellbar und ermöglicht auf einfache Weise die Übertragung von Zug- und Druckkräften.

Die Hakenverbindung ist zweckmäßigerweise von einer am Rahmen bzw. am Versteifungselement ausgebildeten Ausnehmung und einem mit der Ausnehmung in Wirkverbindung bringbaren, am Versteifungselement bzw. am Rahmen ausgebildeten Fortsatz gebildet, wodurch ein geringer Bauaufwand für die Hakenverbindung und ein einfaches Öffnen und Schließen der Hakenverbindung erzielbar ist.

Die Zapfenverbindung ist hierbei zweckmäßigerweise von einem am Rahmen bzw. am Versteifungselement ausgebildeten Zapfen und einer mit dem Zapfen in Wirkverbindung bringbaren, am Versteifungselement bzw. am Rahmen ausgebildeten Öffnung gebildet. Eine derartige Zapfenverbindung weist einen geringen Bauaufwand auf.

Besonderer Vorteile sind erzielbar, wenn das Versteifungselement am Rahmen elastisch befestigbar ist. Eine derartige elastische Befestigung des Versteifungselements am Rahmen kann mittels Kunststoffteilen oder gummierten Übergangsstellen erfolgen. Durch die elastische Befestigung kann eine Geräuschreduzierung und eine Abbau von Belastungsspitzen auf einfache Weise erzielt werden.

Weitere Vorteile und Einzelheiten der Erfindung werden anhand der in den schematischen Figuren dargestellten Ausführungsbeispiele näher erläutert. Hierbei zeigt
- Figur 1: den Rahmen gemäß einer ersten Ausführungsform eines erfindungsgemäßen Flurförderzeugs in einer perspektivischen Ansicht,
- Figur 2: den Rahmen gemäß einer zweiten Ausführungsform eines erfindungsgemäßen Flurförderzeugs in einer perspektivischen Ansicht,
- Figur 3: den Rahmen gemäß einer dritten Ausführungsform eines erfindungsgemäßen Flurförderzeugs in einer perspektivischen Ansicht und
- Figur 4: den Rahmen gemäß einer vierten Ausführungsform eines erfindungsgemäßen Flurförderzeugs in einer Seitenansicht.

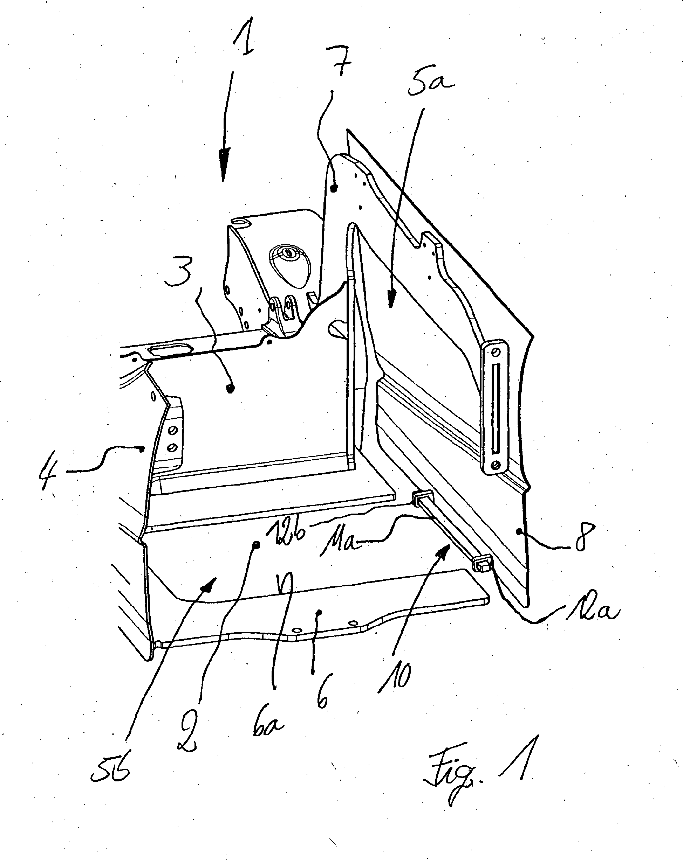

In der Figur 1 ist eine erste Ausführungsform eines Rahmens 1 eines erfindungsgemäßen als Gegengewichts-Gabelstapler ausgebildeten Flurförderzeugs dargestellt. Der Rahmen 1 ist mit einem sogenannten Batteriefach 2 zur Aufnahme einer nicht mehr dargestellten Energieversorgungseinheit versehen. Die Energieversorgungseinheit kann beispielsweise als Batterieblock ausgebildet sein. Es ist jedoch ebenfalls die Ausbildung der Energieversorgungseinheit als Brennstoffzelleneinheit oder als Hybrideinheit möglich.

Das Batteriefach 2 ist nach vorne durch ein vorderes Rahmenblech 3 und zur linken Seite durch ein Rahmenblech 4 begrenzt. Nicht mehr dargestellt ist ein hinteres Rahmenblech, das das Batteriefach 2 nach hinten abschließt.

Der Rahmen 1 ist mit einer Öffnung für einen Wechsel der Energieversorgungseinheit in horizontaler Richtung versehen. Die Öffnung ist hierbei von einer seitlichen Rahmenöffnung 5a und einer nach unten an die seitliche Rahmenöffnung 5a anschließende unteren Rahmenöffnung 5b gebildet, die von einer Aussparung 6a in einer Bodenplatte 6 des Rahmens 1 gebildet ist.

Ein Träger 7 verbindet hierbei am oberen Bereich der seitlichen Rahmenöffnung 5a das vordere Rahmenblech 3 mit dem hinteren Rahmenblech.

Die seitliche Rahmenöffnung 5a ist mittels einer Batteriefachklappe 8 verschließbar, die am Rahmen 1 schwenkbar gelagert ist. An der Batteriefachklappe 8 ist im unteren Bereich erfindungsgemäß ein Versteifungselement 10 angeordnet, das bei geschlossener Batteriefachklappe 8 am Übergangsbereich von der seitlichen Rahmenöffnung 5a zur unteren Rahmenöffnung 5b in der Aussparung 6a der Bodenplatte 6 des Rahmens 1 formschlüssig befestigbar ist.

Das Versteifungselement 10 ist hierbei als stabförmiger Druckträger 11a ausgebildet, das mittels Befestigungseinrichtungen 12a, 12b an der Batteriefachklappe 8 befestigt ist.

In der geschlossenen Stellung der Batteriefachklappe 8 greift das Versteifungselement 10 formschlüssig in die Aussparung 6a in der Bodenplatte 6 des Rahmen 1 ein, wodurch mit dem Versteifungselement 10 im unteren Bereich des Rahmens 1 auftretende Druckkräfte aufgenommen werden können.

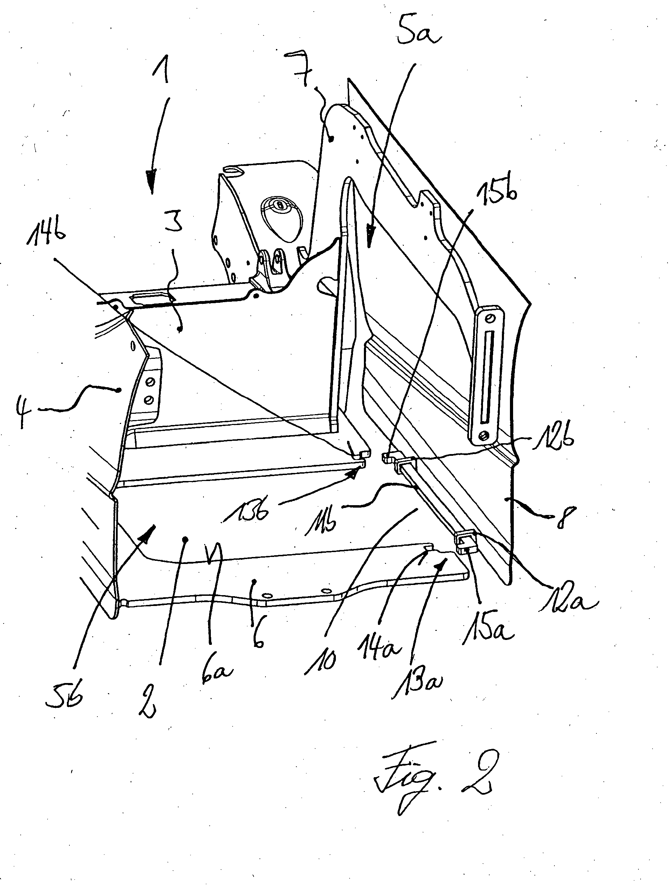

Bei der in der Figur 2 dargestellten zweiten Ausführungsform eines erfindungsgemäßen Rahmens 1 ist das an dem unteren Bereich der Batteriefachklappe 8 angeordnete Versteifungselement 10 als stabförmiger Zug- und Druckträger 11b ausgebildet, das am Übergangsbereich von der seitlichen Rahmenöffnung 5a zur unteren Rahmenöffnung 5b in der Aussparung 6a der Bodenplatte 6 des Rahmens 1 mittels Hakenverbindungen 13a, 13b formschlüssig befestigbar ist. Das Versteifungselement 10 ist hierbei mittels Befestigungseinrichtungen 12a, 12b an der Batteriefachklappe 8 angeordnet.

Die Hakenverbindungen 13a, 13b sind hierbei von in der Bodenplatte 6 des Rahmens 1 gebildeten Ausnehmungen 14a, 14b gebildet, in denen jeweils ein hakenförmiger Fortsatz 15a, 15b des Versteifungselements 10 bei geschlossener Batteriefachklappe 8 eingreift.

In der geschlossenen Stellung der Batteriefachklappe 8 greift das Versteifungselement 10 mittels der Fortsätze 15a, 15b formschlüssig in die an der Bodenplatte 6 ausgebildeten Ausnehmungen 14a, 14b des Rahmens 1 ein. Mit dem Versteifungselement 10 können hierbei sowohl Druckkräfte als auch Zugkräfte aufgenommen und übertragen werden.

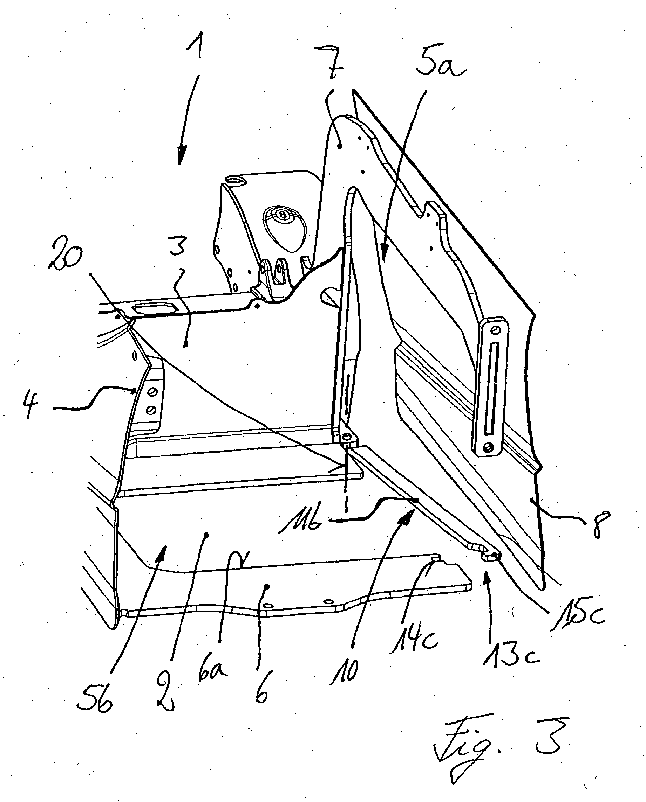

In der in der Figur 3 dargestellten dritten Ausführungsform eines erfindungsgemäßen Rahmens 1 ist das Versteifungselement 10 am Übergangsbereich von der seitlichen Rahmenöffnung 5a zur unteren Rahmenöffnung 5b angeordnet, an einem, insbesondere dem vorderen Ende um eine vertikale Achse 20 schwenkbar am Rahmen 1 gelagert und in einer geschlossenen Position an dem anderen, insbesondere dem hinteren Ende an der Aussparung der Bodenplatte 6 des Rahmens 1 formschlüssig befestigbar. Das Versteifungselement 10 ist als Zug- und Druckträger 11b ausgebildet und mittels einer Hakenverbindung 13c an dem Rahmen 1 formschlüssig befestigbar. Hierzu ist an der Bodenplatte 6 des Rahmens 1 eine Ausnehmung 14c vorgesehen, in die bei geschlossenem Versteifungselement 10 ein hakenförmiger Fortsatz 15c des Versteifungselements 10 eingreift.

In der geschlossenen Stellung des Versteifungselements 10 können hierbei aufgrund der Hakenverbindung 13c mit dem Versteifungselement 10 Zug- und Druckkräfte aufgenommen und übertragen werden.

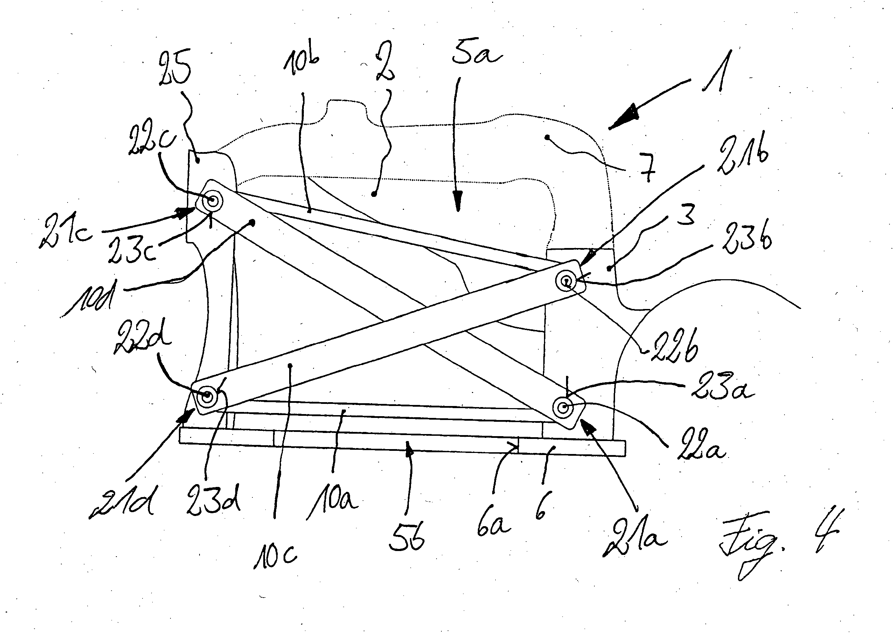

Bei der in der Figur 4 dargestellten vierten Ausführungsform eines erfindungsgemäßen Rahmens 1 sind an der seitlichen Rahmenöffnung 2a mehrere Versteifungselemente 10a, 10b, 10c, 10d formschlüssig befestigbar. Zur formschlüssigen Befestigung ist jeweils eine Zapfenverbindung 21a, 21b, 21c, 21d vorgesehen, die von am Rahmen 1 angeordneten zylindrischen Zapfen 22a, 22b 22c, 22d und an den Versteifungselementen 10a, 10b, 10c, 10d ausgebildeten kreisförmigen Öffnungen 23a, 23b, 23c, 23d gebildet ist. Die Zapfen 22a, 22b sind hierbei an dem Seitenbereich des vorderen Rahmenblechs 3 des Rahmens 1 vertikal beabstandet angeordnet. Entsprechend sind die Zapfen 22c, 22d an einem hinteren Rahmenblech 25 des Rahmens 1 vertikal beabstandet angeordnet.

Die Versteifungselemente 10a, 10b, 10c, 10d sind hierbei fachwerkartig angeordnet. Das Versteifungselement 10a ist hierbei zwischen den unteren Zapfenverbindungen 21a, 21d formschlüssig befestigbar und das Versteifungselement 10b zwischen den oberen Zapfenverbindungen 21b, 21c formschlüssig befestigbar. Die Versteifungselemente 10c, 10d bilden hierbei diagonal angeordnete Versteifungselemente, wobei das Versteifungselement 10c zwischen der hinteren, unteren Zapfenverbindung 21d und der vorderen, oberen Zapfenverbindung 21b und das Versteifungselement 10d zwischen der hinteren, oberen Zapfenverbindung 21c und der vorderen, unteren Zapfenverbindung 21a formschlüssig befestigt werden kann.

Die Versteifungselemente 10a bis 10d können hierbei durch Aufsetzen auf die Zapfenverbindungen 21a bis 21d formschlüssig zwischen dem vorderen Rahmenblech 3 und dem hinteren Rahmenblech 25 im Bereich der seitlichen Rahmenöffnung 5a befestigt werden. Sofern die Versteifungselemente 10a bis 10d entfernt sind, ist das Batteriefach 2 für den Wechsel der Energieversorgungseinheit leicht zugänglich. Mit den fachwerkartig angeordneten Versteifungselementen 10a bis 10d können hierbei neben Zug- und Druckkräften ebenfalls Biege- und Torsionsmomente aufgenommen und übertragen werden.

Bei einer Versteifung des Rahmens 1 mit mehreren Versteifungselementen ist es ebenfalls möglich, lediglich die Versteifungselemente 10a, 10b vorzusehen, wodurch sich ein flächenartiger Verbund ergibt. Zudem können lediglich die Versteifungselemente 10c, 10d vorgesehen werden.

Durch das erfindungsgemäße Versteifungselement 10 bzw. die Versteifungselemente 10a bis 10d kann hierbei auf einfache Weise der Rahmen 1 im Bereich der seitlichen Rahmenöffnung 5a und am Übergang des seitliche Rahmenöffnung 5a zur unteren Rahmenöffnung 5b verstärkt werden, und die im Betreib des Flurförderzeug, beispielsweise bei aufgenommener Last, auftretenden Kräfte und/oder die bei einer Kollision des Flurförderzeugs mit einem Hindernis auftretenden Kräfte übertragen werden, wodurch sich weiterhin über die an der Öffnung angeordnete Versteifungselemente 10, 10a bis 10d ein günstiger und direkter Kraftfluss erzielen lässt. Der Träger 7 kann hierdurch kleiner und schwächer dimensioniert werden bzw. ganz entfallen.

## Patentansprüche

1. Flurförderzeug, insbesondere Gegengewichts-Gabelstapler, mit einem Rahmen (1) und einer innerhalb des Rahmens (1) in einem Batteriefach (2) angeordneten Energieversorgungseinheit, wobei der Rahmen (1) mit einer Öffnung für einen Wechsel der Energieversorgungseinheit in horizontaler Richtung versehen ist und die Öffnung von einer seitlichen Rahmenöffnung (5a) und einer nach unten an die seitliche Rahmenöffnung (5a) anschließenden und übergehenden unteren Rahmenöffnung (5b) gebildet ist, wobei die Rahmenöffnung (5b) von einer Aussparung (6a) in einer Bodenplatte (6) des Rahmens (1) gebildet ist, wobei am oberen Bereich der seitlichen Rahmenöffnung (5a) ein Träger (7) angeordnet ist, der ein das Batteriefach (2) nach vorne begrenzendes vorderes Rahmenblech (3) mit einem das Batteriefach (2) nach hinten abschließenden hinteren Rahmenblech verbindet, und die seitliche Rahmenöffnung (5a) mittels einer Batteriefachklappe (8) verschließbar ist, **dadurch gekennzeichnet, dass** mindestens ein Versteifungselement (10) vorgesehen ist, das am Übergangsbereich von der seitlichen Rahmenöffnung (5a) zur unteren Rahmenöffnung (5b) in der Aussparung (6a) der Bodenplatte (6) des Rahmens (1) formschlüssig befestigbar ist.

2. Flurförderzeug, insbesondere Gegengewichts-Gabelstapler, mit einem Rahmen (1) und einer innerhalb des Rahmens (1) in einem Batteriefach (2) angeordneten Energieversorgungseinheit, wobei der Rahmen (1) mit einer Öffnung für einen Wechsel der Energieversorgungseinheit in horizontaler Richtung versehen ist und die Öffnung von einer seitlichen Rahmenöffnung (5a) und einer nach unten an die seitliche Rahmenöffnung (5a) anschließenden und übergehenden unteren Rahmenöffnung (5b) gebildet ist, wobei die Rahmenöffnung (5b) von einer Aussparung (6a) in einer Bodenplatte (6) des Rahmens (1) gebildet ist, wobei am oberen Bereich der seitlichen Rahmenöffnung (5a) ein Träger (7) angeordnet ist, der ein das Batteriefach (2) nach vorne begrenzendes vorderes Rahmenblech (3) mit einem das Batteriefach (2) nach hinten abschließenden hinteren Rahmenblech verbindet, und die seitliche Rahmenöffnung (5a) mittels einer Batteriefachklappe (8) verschließbar ist, **dadurch gekennzeichnet, dass** mehrere Versteifungselemente (10a, 10b, 10c, 10d) fachwerkartig angeordnet sind und zur formschlüssigen Verbindung des Versteifungselements (10a, 10b, 10c, 10d) mit dem Rahmen (1) eine Zapfenverbindung (21 a; 21b; 21c; 2 1 d) vorgesehen ist.

3. Flurförderzeug nach Anspruch 1, **dadurch gekennzeichnet, dass** das Versteifungselement (10) an einem Ende um eine vertikale Achse (20) schwenkbar am Rahmen (1) gelagert ist und in einer geschlossenen Position an dem anderen Ende am Rahmen (1) formschlüssig befestigbar ist.

4. Flurförderzeug nach Anspruch 1, **dadurch gekennzeichnet, dass** das Versteifungselement (10) an der die seitliche Rahmenöffnung (5a) verschließenden Batteriefachklappe (8) angeordnet ist, wobei das Versteifungselement (10) bei geschlossener Batteriefachklappe (8) am Rahmen (1) formschlüssig befestigbar ist.

5. Flurförderzeug nach einem der Ansprüche 1 bis 4, **dadurch gekennzeichnet, dass** das Versteifungselement (10; 10a, 10b, 10c, 10d) als Druck- und/oder Zugträger ausgebildet ist.

6. Flurförderzeug nach der Ansprüche 1 bis 5, **dadurch gekennzeichnet, dass** zur formschlüssigen Verbindung des Versteifungselements (10; 10a, 10b, 10c, 10d) mit dem Rahmen (1) das Versteifungselement (10; 10a, 10b, 10c, 10d) vorspannbar ist, insbesondere mittels eines Hydraulikzylinders.

7. Flurförderzeug nach Anspruch 1 und einem der Ansprüche 3 bis 6, **dadurch gekennzeichnet, dass** zur formschlüssigen Verbindung des Versteifungselements (10) mit dem Rahmen (1) eine Hakenverbindung (13a; 13b; 13c) vorgesehen ist.

8. Flurförderzeug nach Anspruch 7, **dadurch gekennzeichnet, dass** die Hakenverbindung (13a; 13b; 13c) von einer am Rahmen (1) bzw. am Versteifungselement (10) ausgebildeten Ausnehmung (14a; 14b; 14c) und einem mit der Ausnehmung (14a; 14b; 14c) in Wirkverbindung bringbaren, am Versteifungselement (10) bzw. am Rahmen (1) ausgebildeten Fortsatz (15a; 15b; 15c) gebildet ist.

9. Flurförderzeug nach Anspruch 2, **dadurch gekennzeichnet, dass** die Zapfenverbindung (21a; 21 b; 21c; 21d) von einem am Rahmen (1) bzw. am
Versteifungselement (10a, 10b, 10c, 10d) ausgebildeten Zapfen (22a; 22b; 22c; 22d) und einer mit dem Zapfen (22a; 22b; 22c; 22d) in Wirkverbindung bringbaren, am Versteifungselement(10a, 10b, 10c, 10d) bzw. am Rahmen (1) ausgebildeten Öffnung (23a; 23b; 23c; 23d) gebildet ist.

10. Flurförderzeug nach einem der vorangegangenen Ansprüche, **dadurch gekennzeichnet, dass** das Versteifungselement (10; 10a, 10b, 10c, 10d) am Rahmen (1) elastisch befestigbar ist.

## Claims

1. Industrial truck, in particular counterbalance forklift truck, with a frame (1) and a power supply unit arranged in a battery compartment (2) within the frame (1), wherein the frame (1) is provided with an opening for replacing the power supply unit in the horizontal direction, and the opening is formed by a lateral frame opening (5a) and a lower frame opening (5b) which adjoins and merges into the lateral frame opening (5a), wherein the frame opening (5b) is formed by a cutout (6a) in a base plate (6) of the frame (1), wherein a support (7) is arranged on the upper region of the lateral frame opening (5a), the support connecting a front frame plate (3), which bounds the battery compartment (2) to the front, to a rear frame plate, which adjoins the battery compartment (2) to the rear, and the lateral frame opening (5a) is closable by means of a battery compartment flap (8), **characterized in that** at least one reinforcing element (10) is provided which is fastenable in a form-fitting manner in the cutout (6a) of the base plate (6) of the frame (1) at the transition region from the lateral frame opening (5a) to the lower frame opening (5b).

2. Industrial truck, in particular counterbalance forklift truck, with a frame (1) and a power supply unit arranged in a battery compartment (2) within the frame (1), wherein the frame (1) is provided with an opening for replacing the power supply unit in the
horizontal direction, and the opening is formed by a lateral frame opening (5a) and a lower frame opening (5b) which adjoins and merges into the lateral frame opening (5a), wherein the frame opening (5b) is formed by a cutout (6a) in a base plate (6) of the frame (1), wherein a support (7) is arranged on the upper region of the lateral frame opening (5a), the support connecting a front frame plate (3), which bounds the battery compartment (2) to the front, to a rear frame plate, which adjoins the battery compartment (2) to the rear, and the lateral frame opening (5a) is closable by means of a battery compartment flap (8), **characterized in that** a plurality of reinforcing elements (10a, 10b, 10c, 10d) are arranged in the manner of a lattice, and a pin joint (21a; 21b; 21c; 21d) is provided for the form-fitting connection of the reinforcing element (10a, 10b, 10c, 10d) to the frame (1).

3. Industrial truck according to Claim 1, **characterized in that** the reinforcing element (10) is mounted at one end on the frame (1) so as to be pivotable about a vertical axis (20) and, in a closed position, is fastenable at the other end to the frame (1) in a form-fitting manner.

4. Industrial truck according to Claim 1, **characterized in that** the reinforcing element (10) is arranged on the battery compartment flap (8) closing the lateral frame opening (5a), wherein, when the battery compartment flap (8) is closed, the reinforcing element (10) is fastenable to the frame (1) in a form-fitting manner.

5. Industrial truck according to one of Claims 1 to 4, **characterized in that** the reinforcing element (10;
10a, 10b, 10c, 10d) is designed as a push and/or pull member.

6. Industrial truck according to one of Claims 1 to 5, **characterized in that** the reinforcing element (10; 10a, 10b, 10c, 10d) is pretensionable, in particular by means of a hydraulic cylinder, for the form-fitting connection of the reinforcing element (10; 10a, 10b, 10c, 10d) to the frame (1).

7. Industrial truck according to Claim 1 and one of Claims 3 to 6, **characterized in that** a hook connection (13a; 13b; 13c) is provided for the form-fitting connection of the reinforcing element (10) with the frame (1).

8. Industrial truck according to Claim 7, **characterized in that** the hook connection (13a; 13b;
13c) is formed by a recess (14a; 14b; 14c) formed on the frame (1) or on the reinforcing element (10) and by an extension (15a; 15b; 15c) which can be brought into operative connection with the recess (14a; 14b; 14c) and is formed on the reinforcing element (10) or on the frame (1).

9. Industrial truck according to Claim 2, **characterized in that** the pin joint (21a; 21b; 21c; 21d) is formed by a pin (22a; 22b; 22c; 22d) which is formed on the frame (1) or on the reinforcing element (10a, 10b, 10c, 10d) and by an opening (23a; 23b; 23c;
23d) which can be brought into operative connection with the pin (22a; 22b; 22c; 22d) and is formed on the reinforcing element (10a; 10b; 10c; 10d) or on the frame (1).

10. Industrial truck according to one of the preceding Claims, **characterized in that** the reinforcing element (10; 10a, 10b, 10c, 10d) is fastenable elastically to the frame (1).

## Revendications

1. Chariot de manutention, en particulier chariot élévateur à fourche à contrepoids, comprenant un châssis (1) et une unité d'alimentation en énergie disposée dans un compartiment de batterie (2) à l'intérieur du châssis (1), le châssis (1) étant pourvu d'une ouverture pour un remplacement de l'unité d'alimentation en énergie dans la direction horizontale et l'ouverture étant formée par une ouverture latérale de châssis (5a) et une ouverture inférieure de châssis (5b) se raccordant vers le bas à l'ouverture latérale de châssis (5a) et se prolongeant par celle-ci, l'ouverture de châssis (5b) étant formée par un évidement (6a) dans une plaque de fond (6) du châssis (1), un support (7) étant disposé au niveau de la région supérieure de l'ouverture latérale de châssis (5a), lequel support relie une tôle avant de châssis (3) limitant vers l'avant le compartiment de batterie (2) à une tôle arrière de châssis terminant vers l'arrière le compartiment de batterie (2), et l'ouverture latérale de châssis (5a) pouvant être fermée au moyen d'un volet de compartiment de batterie (8), **caractérisé en ce qu'**au moins un élément de renforcement (10) est prévu, lequel peut être fixé par engagement par complémentarité de formes dans l'évidement (6a) de la plaque de fond (6) du châssis (1) au niveau de la région de transition de l'ouverture latérale de châssis (5a) à l'ouverture inférieure de châssis (5b).

2. Chariot de manutention, en particulier chariot élévateur à fourche à contrepoids, comprenant un châssis (1) et une unité d'alimentation en énergie disposée dans un compartiment de batterie (2) à l'intérieur du châssis (1), le châssis (1) étant pourvu d'une ouverture pour un remplacement de l'unité d'alimentation en énergie dans la direction horizontale et l'ouverture étant formée par une ouverture latérale de châssis (5a) et une ouverture inférieure de châssis (5b) se raccordant vers le bas à l'ouverture latérale de châssis (5a) et se prolongeant par celle-ci, l'ouverture de châssis (5b) étant formée par un évidement (6a) dans une plaque de fond (6) du châssis (1), un support (7) étant disposé au niveau de la région supérieure de l'ouverture latérale de châssis (5a), lequel support relie une tôle avant de châssis (3) limitant vers l'avant le compartiment de batterie (2) à une tôle arrière de châssis terminant vers l'arrière le compartiment de batterie (2), et l'ouverture latérale de châssis (5a) pouvant être fermée au moyen d'un volet de compartiment de batterie (8), **caractérisé en ce que** plusieurs éléments de renforcement (10a, 10b, 10c, 10d) sont disposés à la manière d'un treillis et une liaison par tenon (21a ; 21b ; 21c ; 21d) est prévue pour la liaison par engagement par complémentarité de formes de l'élément de renforcement (10a, 10b, 10c, 10d) au châssis (1).

3. Chariot de manutention selon la revendication 1, **caractérisé en ce que** l'élément de renforcement (10) est monté à une extrémité sur le châssis (1) de manière à pouvoir pivoter autour d'un axe vertical (20) et peut être fixé par engagement par complémentarité de formes au châssis (1) à l'autre extrémité dans une position fermée.

4. Chariot de manutention selon la revendication 1, **caractérisé en ce que** l'élément de renforcement (10) est disposé sur le volet de compartiment de batterie (8) fermant l'ouverture latérale de châssis (5a), l'élément de renforcement (10) pouvant être fixé par engagement par complémentarité de formes au châssis (1) lorsque le volet de compartiment de batterie (8) est fermé.

5. Chariot de manutention selon l'une quelconque des revendications 1 à 4, **caractérisé en ce que** l'élément de renforcement (10 ; 10a, 10b, 10c, 10d) est réalisé sous forme d'élément de compression et/ou de traction.

6. Chariot de manutention selon les revendications 1 à 5, **caractérisé en ce que** l'élément de renforcement (10 ; 10a, 10b, 10c, 10d) peut être précontraint pour la liaison par engagement par complémentarité de formes de l'élément de renforcement (10 ; 10a, 10b, 10c, 10d) au châssis (1), en particulier au moyen d'un cylindre hydraulique.

7. Chariot de manutention selon la revendication 1 et selon l'une quelconque des revendications 3 à 6, **caractérisé en ce qu'**une liaison par accrochage (13a ; 13b ; 13c) est prévue pour la liaison par engagement par complémentarité de formes de l'élément de renforcement (10) au châssis (1).

8. Chariot de manutention selon la revendication 7, **caractérisé en ce que** la liaison par accrochage (13a ; 13b ; 13c) est formée par un évidement (14a ; 14b ; 14c) réalisé sur le châssis (1) ou sur l'élément de renforcement (10) et une saillie (15a ; 15b ; 15c) pouvant être amenée en liaison fonctionnelle avec l'évidement (14a ; 14b ; 14c) et réalisée sur l'élément de renforcement (10) ou sur le châssis (1).

9. Chariot de manutention selon la revendication 2, **caractérisé en ce que** la liaison par tenon (21a ; 21b ; 21c ; 21d) est formée par un tenon (22a ; 22b ; 22c) réalisé sur le châssis (1) ou sur l'élément de renforcement (10a, 10b, 10c, 10d) et une ouverture (23a ; 23b ; 23c ; 23d) pouvant être amenée en liaison fonctionnelle avec le tenon (22a ; 22b ; 22c ; 22d) et réalisée sur l'élément de renforcement (10a, 10b, 10c, 10d) ou sur le châssis (1).

10. Chariot de manutention selon l'une quelconque des revendications précédentes, **caractérisé en ce que** l'élément de renforcement (10 ; 10a, 10b, 10c, 10d) peut être fixé élastiquement au châssis (1).
